(19) Europäisches Patentamt
European Patent Office
Office européen des brevets

(11) **EP 4 231 205 B1**

(12) **EUROPEAN PATENT SPECIFICATION**

(45) Date of publication and mention
of the grant of the patent:
**17.09.2025 Bulletin 2025/38**

(21) Application number: **22209576.2**

(22) Date of filing: **25.11.2022**

(51) International Patent Classification (IPC):
***G06N 10/40*** *(2022.01)* ***G06N 10/20*** *(2022.01)*

(52) Cooperative Patent Classification (CPC):
**G06N 10/40; G06N 10/20**

(54) **CONTROL METHOD OF QUANTUM BIT AND QUANTUM COMPUTER**

STEUERVERFAHREN FÜR QUANTENBIT UND QUANTENCOMPUTER

PROCÉDÉ DE COMMANDE DE BIT QUANTIQUE ET ORDINATEUR QUANTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.02.2022 JP 2022022715**

(43) Date of publication of application:
**23.08.2023 Bulletin 2023/34**

(73) Proprietor: **Hitachi, Ltd.**
**Tokyo 100-8280 (JP)**

(72) Inventors:
• **SHINKAI, Gou**
**Tokyo, 100-8280 (JP)**
• **TSUCHIYA, Ryuta**
**Tokyo, 100-8280 (JP)**
• **KANNO, Yusuke**
**Tokyo, 100-8280 (JP)**

(74) Representative: **Strehl & Partner mbB**
**Maximilianstrasse 54**
**80538 München (DE)**

(56) References cited:
• **VELDHORST M. ET AL: "Silicon CMOS
architecture for a spin-based quantum
computer", vol. 8, no. 1, 1 December 2017
(2017-12-01), XP093006683, Retrieved from the
Internet <URL:https://www.nature.com/articles/
s41467-017-01905-6.pdf> [retrieved on
20230628], DOI: 10.1038/s41467-017-01905-6**
• **ZHENYU CAI ET AL: "A Silicon Surface Code
Architecture Resilient Against Leakage Errors",
ARXIV.ORG, CORNELL UNIVERSITY LIBRARY,
201 OLIN LIBRARY CORNELL UNIVERSITY
ITHACA, NY 14853, 23 April 2019 (2019-04-23),
XP081172706**

**Description**

BACKGROUND OF THE INVENTION

1. Field of the Invention

The present invention relates to a control method of integrated quantum bits.

2. Description of the Related Art

A quantum computer has attracted attention since the quantum computer can perform information processing faster than an existing computer. The existing computer handles binary values of 0 and 1, whereas the quantum computer is characterized by being capable of handling a superposed state of the values. A quantum computation is realized by performing an appropriate operation on each quantum bit or two quantum bits. From the viewpoint of computer science, it is known that an arbitrary operation can be realized by a combination of two types of one-quantum bit computations (one-quantum gate operation) and one type of two-quantum bit computation (two-quantum gate operation).

The semiconductor quantum bit is a quantum bit generated from silicon semiconductor engineering that supports the modern information society. The semiconductor quantum bit is a method in which a single electron is supplemented by an electrostatic effect, and a spin direction of the electron is associated with 0 or 1. There are two methods for integrating semiconductor quantum bits: a method in which an individual gate electrode for electron supplementation is provided for each quantum bit; and a method in which quantum bits are arranged in an array by using a gate electrode common to a plurality of quantum bits.

The former method is only proposed as an idea due to difficulty in wiring. The latter is demonstrated. Regarding the latter, there is JP 2021-27142 A that proposes to extend quantum bits two-dimensionally.

Further related methods for controlling semiconductor quantum bits are disclosed in the following documents:

- Veldenhorst M. et. al: "Silicon CMOS architecture for a spin-based quantum computer", Nature Communications, vol. 8, no. 1, 1 December 2017
- Zhenyu Cai et. al.: "A Silicon Surface Code Architecture Resilient Against Leakage Errors", ARXIV.ORG, CORNELL UNIVERSITY LIBRARY, 23 April 2019

SUMMARY OF THE INVENTION

While the quantum processor of the common gate electrode method described in the related art can enhance an integration, individual controllability of the quantum bit is sacrificed by commonality of the gate electrode. In order to execute calculation with a quantum computer, it is necessary to be able to execute two types of one-quantum bit logic gates and one type of two-quantum bit logic gate on a quantum processor.

However, the quantum processor of the common gate electrode method cannot selectively perform a two-quantum bit logic gate for two or more quantum bits. An exchange logic gate (SWAP gate) that exchanges the states of two quantum bits is a typical two-quantum bit logic gate. The computation executed by the SWAP gate operation will be referred to as an exchange logic computation.

In the quantum processor of the common gate electrode method, the exchange logic gate cannot be performed on one quantum bit pair, and the exchange logic gate is caused to act on a plurality of quantum bit pairs at the same time.

As described above, in the quantum processor of the common gate electrode method, it is difficult to provide a logic gate required by the quantum computer, which is a problem to be solved in order to work as the quantum computer.

In this regard, an object of the present invention is to selectively perform two-quantum bit logic gate operation on two quantum bits having a common gate.

A preferable aspect of the present invention is a control method according to claim 1.

Another preferable aspect of the present invention is a quantum computer according to claim 8.

It is possible to selectively perform two-quantum bit logic gate operation on two quantum bits having a common gate.

BRIEF DESCRIPTION OF THE DRAWINGS

Fig. 1 is an explanatory diagram of a quantum bit using an electron spin state;
Fig. 2 is a three-view diagram of a basic structure of an electron spin method quantum bit semiconductor device;
Fig. 3 is a circuit diagram of a quantum processor including an electron spin method quantum bit adopting a common gate method;
Fig. 4 is a conceptual configuration diagram of a quantum computer;
Fig. 5 is an explanatory diagram of states of the quantum bits before and after an inversion logic gate;
Fig. 6A is an explanatory diagram of a method of executing the inversion logic gate on a quantum processor;
Fig. 6B is a principle diagram for explaining a principle of resonant reaction of the quantum bits;
Fig. 6C is a graph for explaining a principle of controlling a resonance frequency of a quantum bit;
Fig. 6D is a principle diagram for explaining a principle of applying a magnetic field to a quantum bit by controlling a current;

Fig. 6E is a principle diagram illustrating a method of applying a selective magnetic field to a quantum bit in a two-dimensional plane;

Fig. 7 is a flowchart of an execution procedure of the inversion logic gate;

Fig. 8 is an explanatory diagram of states of the quantum bit before and after an exchange logic gate;

Fig. 9 is an explanatory diagram of a method of executing the exchange logic gate on a quantum processor;

Fig. 10 is a flowchart of an execution procedure of the exchange logic gate;

Fig. 11 is an explanatory diagram of states of the quantum bit before and after an equivalent two-quantum bit logic gate;

Fig. 12 is a quantum circuit diagram for explaining a method of realizing the equivalent two-quantum bit logic gate;

Fig. 13 is a circuit diagram of a quantum processor for explaining a method of realizing the equivalent two-quantum bit logic gate;

Fig. 14 is a quantum circuit diagram for explaining a method of selectively realizing the equivalent two-quantum bit logic gate; and

Fig. 15 is a flowchart for explaining a method for selectively realizing the equivalent two-quantum bit logic gate.

## DESCRIPTION OF THE PREFERRED EMBODIMENTS

Hereinafter, embodiments will be described in detail with reference to the drawings. However, the present invention is not to be construed as being limited to the description of the embodiments described below. It is easily understood by those skilled in the art that the specific configuration can be changed within the scope of the claims.

In the configuration of the invention described below, the same reference numerals are commonly used for the same portions or portions having similar functions between different drawings, and redundant description may be omitted. In a case where there are a plurality of elements having the same or similar functions, the description may be given with different subscripts. However, the description may be omitted given with the subscripts omitted.

In this specification and the like, notations such as "first", "second", and "third" are given to identify the components, and do not necessarily limit the number, order, or contents thereof. In addition, the numbers for identifying the components are used for each context, and the numbers used in one context do not necessarily indicate the same configuration in another context. In addition, it does not prevent a component identified by a certain number from also functioning as a component identified by another number.

The position, size, shape, range, and the like of each component illustrated in the drawings and the like are intended to facilitate understanding of the invention, and may not represent the actual position, size, shape, range, and the like. Therefore, the present invention is not necessarily limited to the position, size, shape, range, and the like disclosed in the drawings and the like.

As will be described in detail in the following embodiment, an example of the embodiment equivalently realizes a required logic gate by combining a plurality of operations. A two-quantum bit computation is realized by turning on inter-quantum bit coupling in a quantum bit pair. In a structure in which semiconductor quantum bits are integrated (hereinafter, referred to as a quantum bit array), an inter-quantum bit coupling strength in a plurality of quantum bit pairs can be made simultaneously on/off. In each quantum bit pair, the inter-quantum bit coupling exerts an action of exchanging states between the quantum bits (hereinafter, referred to as swapping). Repeating the swapping twice is equivalent to doing nothing. However, when another computation is interposed between swapping and swapping, the operation does not return to the original state. By using this, the two-quantum bit computation is performed only for a specific quantum bit pair.

[First embodiment]

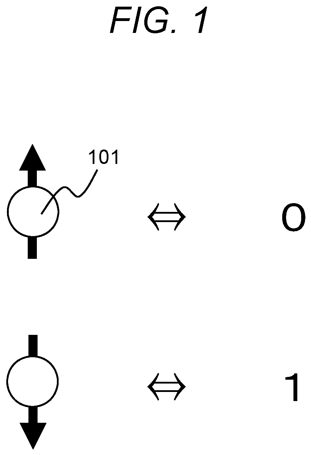

Figs. 1 to 11 are diagrams for explaining a first embodiment.

Fig. 1 illustrates an electron spin or hole spin state and a value associated with the electron spin or hole spin state as an example. A symbol 101 including a circle and an arrow in the drawing is a design of an image of an electron spin. In this manner, the electron spin is expressed as a vector. The basis of the vector is a state in which the spin is directed downward (down state) and a state in which the spin is directed upward (up state), and for example, each is associated with a numerical value of 1 or 0.

An electron spin control such as changing the spin state associated with the numerical value, for example, from the up state to the down state in this manner is a computation of the quantum computer. A characteristic feature of the quantum bit is that the superposition of the up state and the down state can be created. Handling the superposed state of 0 and 1 is one of features of the quantum computer.

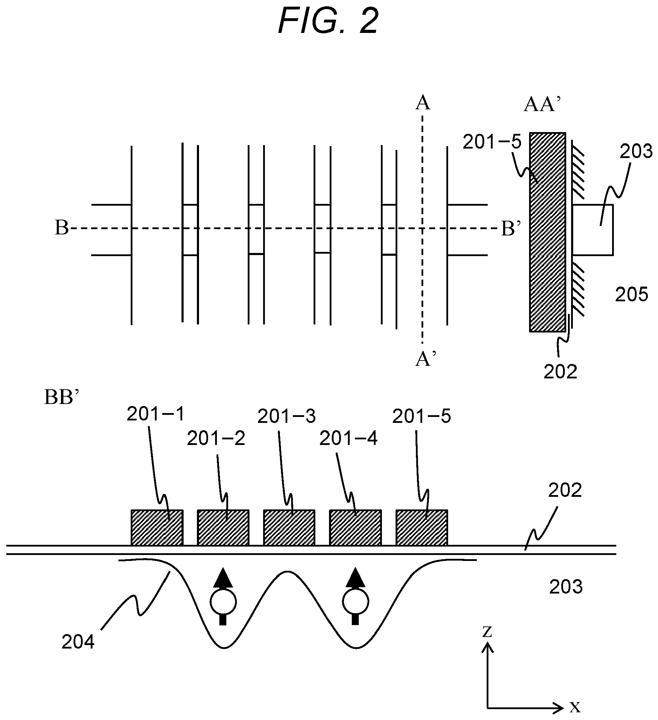

Fig. 2 is a three-view diagram illustrating a basic physical structure of a semiconductor quantum bit. A substrate top surface, an A-A' cross section, and a B-B' cross section are illustrated.

The semiconductor quantum bit includes gate electrodes 201-1 to 201-5, an insulation layer 202, and a semiconductor layer 203. This structure is similar to that of an electrostatic effect transistor. A voltage is applied to the gate electrode 201 to trap electrons in the semiconductor layer 203 by an electrostatic effect. This electron is used as a quantum bit. Conversely, a negative voltage can be applied to eliminate electrons.

The trap and the elimination are combined to arrange the electrons orderly. The electrons are trapped in a valley portion of an electrostatic potential 204 in Fig. 2. At the time of two-quantum bit computation, the quantum bit is controlled by controlling the height of the peak of the potential separating two electrons by the voltage applied to the gate electrode 201-3.

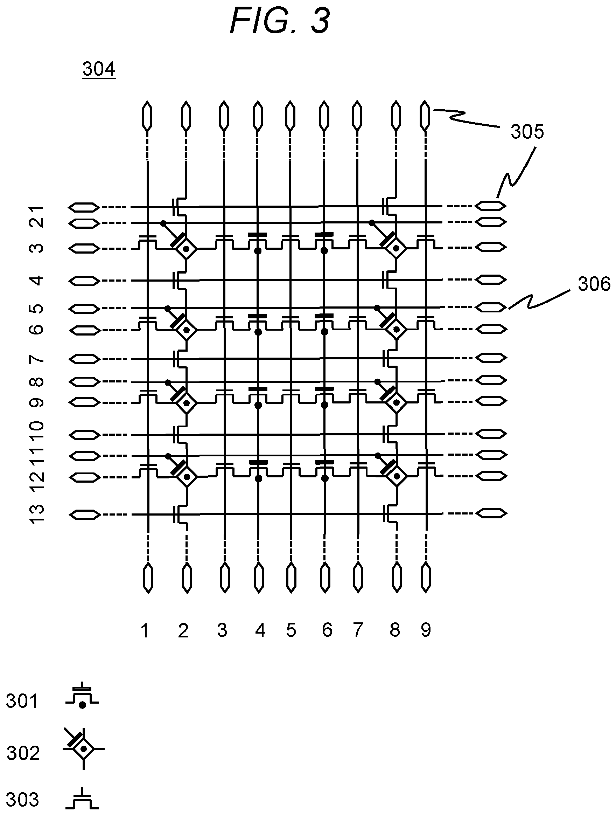

Fig. 3 is a diagram illustrating how a quantum processor 304 is described as a transistor circuit. This circuit diagram illustrates a state where transistors configuring the quantum processor are arranged on a two-dimensional plane, and is described by using three types of transistors 301 to 303. The transistors in each row and each column of the matrix of Fig. 3 have a device structure as illustrated in Fig. 2.

For the sake of explanation, the lines configuring the matrix will be denoted by numbers of 13 rows×9 columns as illustrated in the drawing to describe positions. The numbers of rows and columns is an example, and there is no particular meaning. The rows are denoted by 1 to 13 from the top, and the columns are denoted by 1 to 9 from the left.

The two-terminal transistor 301 represents a transistor for trapping electrons. A black dot in the two-terminal transistor 301 in the drawing represents electrons. The two-terminal transistor 301 includes two terminals and one gate, and traps a single electron.

The four-terminal transistor 302 also represents a transistor for trapping electrons, and channels are connected in four directions of upper, lower, left, and right. That is, the four-terminal transistor includes four terminals and one gate. This four-way connection makes it possible to configure the quantum processor of Fig. 3 in two dimensions. A black dot in the four-terminal transistor 302 in the drawing represent electrons.

The barrier transistor 303 represents a transistor for eliminating electrons. This transistor corresponds to 201-3 in Fig. 2, and executes the two-quantum bit computation by changing the gate voltage of this transistor.

The columns 1, 3, 5, 7, and 9 in Fig. 3 are common gate lines of the barrier transistors 303. The columns correspond to the gate electrode 201-3 in Fig. 2.

The columns 2 and 8 in Fig. 3 are channel paths of the four-terminal transistors 302 and the barrier transistors 303. The columns correspond to the semiconductor layer 203 in Fig. 2. The rows and columns of the channel path are connected, and the four-terminal transistor 302 is connected to channels in four directions.

The columns 4 and 6 in Fig. 3 are common gate lines of the two-terminal transistor 301. The columns correspond to the gate electrode 201-3 in Fig. 2.

The rows 1, 4, 7, 10, and 13 in Fig. 3 are common gate lines of the barrier transistor 303. The columns correspond to the gate electrode 201-3 in Fig. 2.

The rows 2, 5, 8, and 11 in Fig. 3 are common gate lines of the four-terminal transistor 302. The columns correspond to the gate electrode 201-3 in Fig. 2.

The rows 3, 6, 9, and 12 in Fig. 3 are channel paths of the two-terminal transistor 301, the four-terminal transistor 302, and the barrier transistor 303. The columns correspond to the semiconductor layer 203 in Fig. 2.

Note that the semiconductor layer 203 is maintained at a predetermined voltage for operating the transistor as known. In addition, the gate lines of the row and the column are separated.

In addition to using the three types of transistors, the feature in Fig. 3 is that the transistors share the gate electrodes 305 and 306. This transistor arrangement sharing the gate electrode enables two-dimensional arrangement of the quantum processor. Note that the arrangement of each transistor in Fig. 3 is merely an example.

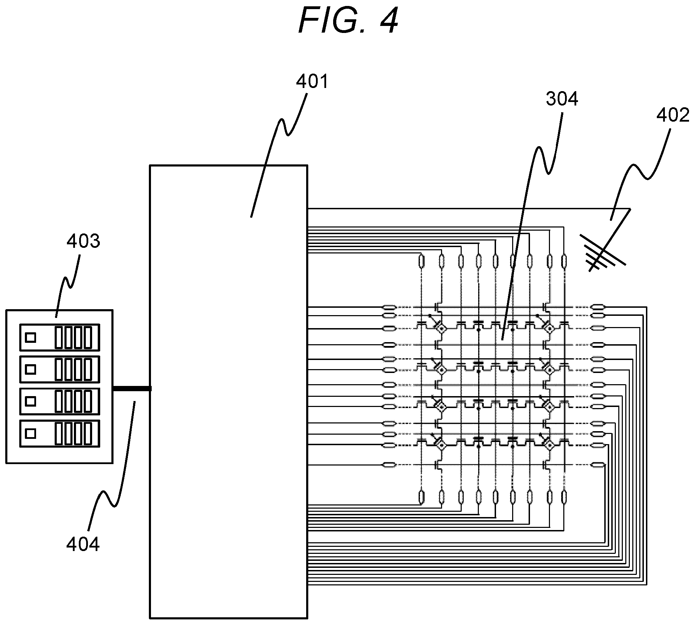

Fig. 4 illustrates a configuration diagram of the entire quantum computer system including the quantum processor of Fig. 3. The quantum computer system includes the quantum processor 304 described in Fig. 3.

The quantum computer system includes a microwave antenna 402 necessary for controlling the quantum processor 304. A drive unit 401 is provided as a circuit that drives the quantum processor 304 and the antenna 402. The drive unit 401 is controlled by an ordinary computer 403. The computer 403 instructs the quantum processor 304 to perform a desired quantum computation according to a program. A communication path 404 is provided between the drive unit 401 and the computer 403.

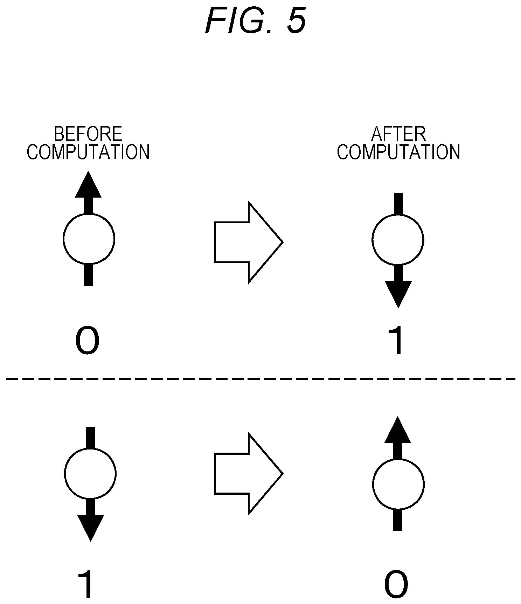

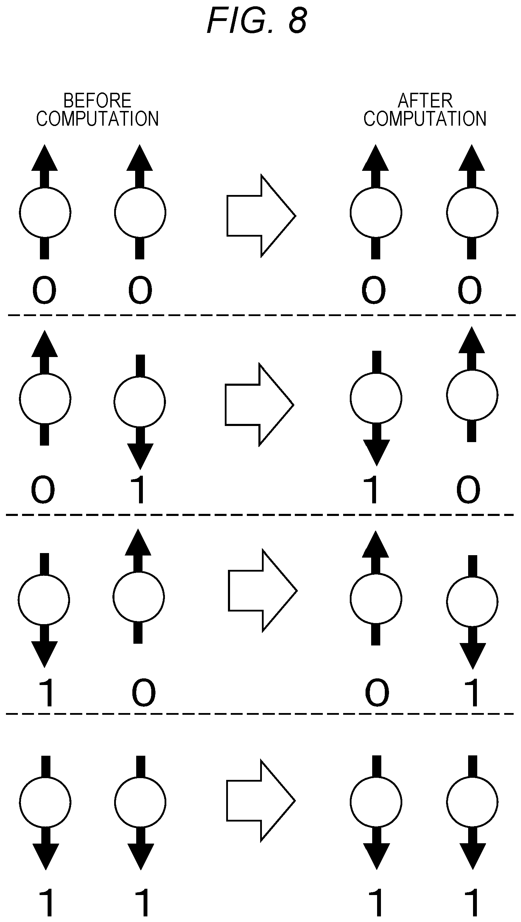

According to the above-described structure and configuration, a method of the quantum computation by the quantum processor will be described below separately for the one-quantum bit computation (Figs. 5 to 7) and the two-quantum bit computation (Figs. 8 to 12). First, an example of the one-quantum bit computation will be described.

Fig. 5 describes changes in the state of electrons and the state of quantum bits before and after the one-quantum bit computation. Various types of one-quantum bit computations such as an inversion gate (X gate) and a phase rotating gate (Z gate) are known. The inversion gate, which is an example of the one-quantum bit computation, is a computation to be set to 1 when the first state is 0 and to be set to 0 when the first state is 1. That is, the inversion gate is a computation (inversion computation) of inverting the state of the quantum bit.

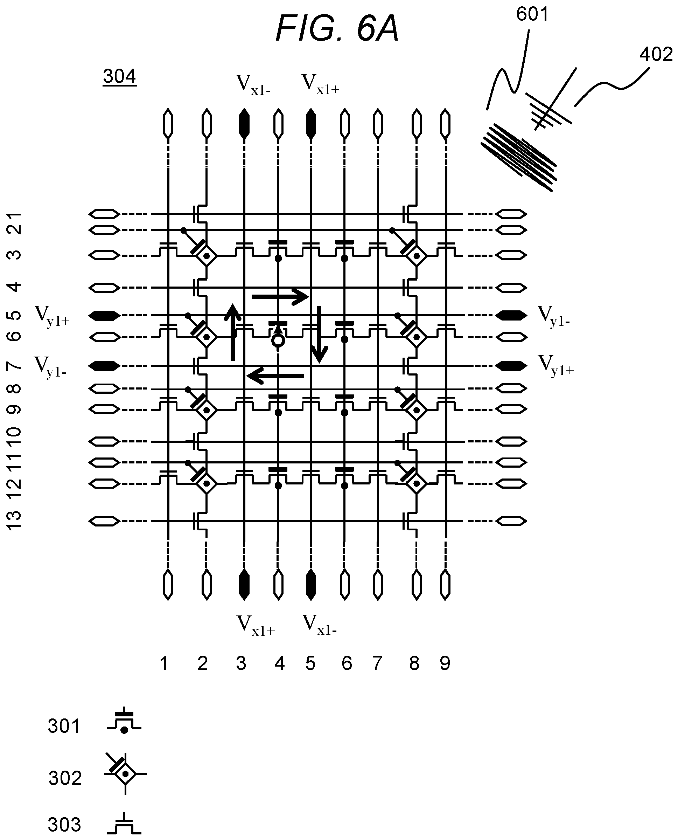

Fig. 6A is a diagram for explaining the operation of the quantum processor 304 at the time of one-quantum bit computation. For the sake of explanation, the lines configuring the matrix will be denoted by numbers of 13 rows×9 columns as illustrated in the drawing to describe positions. The numbers of rows and columns is an example, and there is no particular meaning.

The quantum bit to be computed is a quantum bit (an intersection of the sixth row and the fourth column) indicated by a white circle and located one right and one lower from the upper left corner. At the time of one-quantum bit computation, a voltage is applied to the left, right, upper, and lower lines of the gate electrode line, and a current is caused to flow through the ($V_{x1+}$, $V_{x1-}$, $V_{y1+}$, $V_{y1-}$) gate electrodes. In addition, a quantum bit is irradiated with a microwave 601 from an antenna 402.

In this example, specifically, in order to change the quantum state of the two-terminal transistor 301 at the intersection of the sixth row and the fourth column, a voltage is applied to each terminal of the common gate line of the four-terminal transistor 302 of the fifth row and the common gate line of the barrier transistors 303 of the seventh row, and a current is caused to flow in the direction of an arrow. In addition, a voltage is applied to each terminal of the common gate line of the barrier transistor 303 of the third column and the common gate line of the barrier transistor 303 of the fifth column, and a current is caused to flow in the direction of an arrow.

As a result, the quantum bit in the circulating current is irradiated with the microwave 601, and the one-quantum bit computation can be selectively performed. Hereinafter, a principle that enables gate operation selectively for one-quantum bit will be described in detail.

The state of the quantum bit can be controlled by a microwave. However, the state of the quantum bit is inverted in response to the microwave only when the resonance frequency of the quantum bit coincides with the frequency of the microwave. Such a resonant response to the frequency is one of characteristics of the quantum bit.

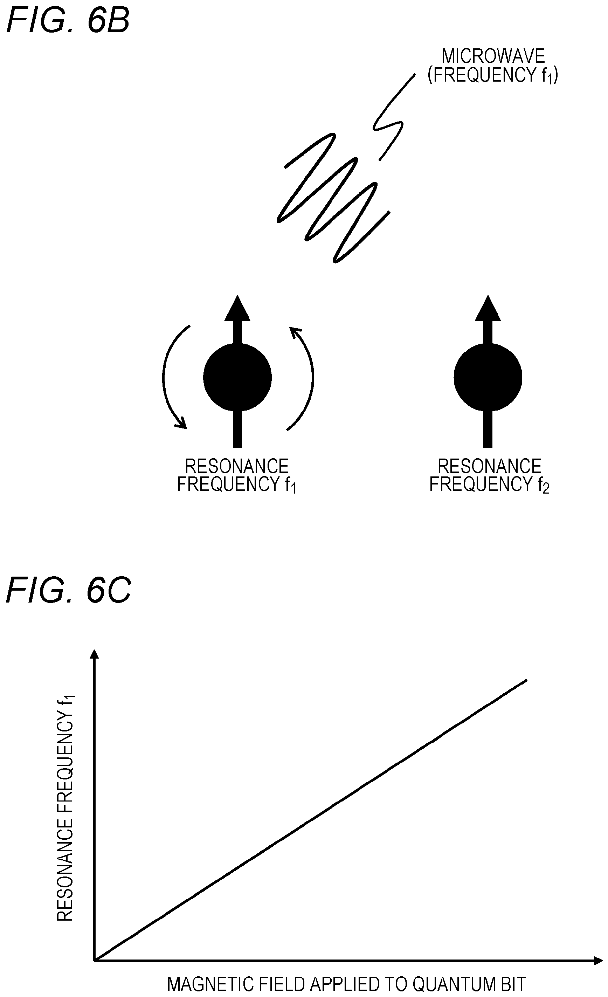

Fig. 6B is a principle diagram for explaining a principle of a resonant reaction of the quantum bits. By using this principle, as illustrated in Fig. 6B, in a case where there are two quantum bits, and the resonance frequencies thereof are f1 and f2, the state of only the quantum bit of the resonance frequency f1 can be selectively inverted by the microwave radiation of the frequency f1. As described above, by controlling the microwave to be radiated and the resonance frequencies of the quantum bit, it is possible to enable selective gate operation configuring the quantum computer of the embodiment.

Fig. 6C is a graph for explaining a principle of controlling the resonance frequency of the quantum bit. This resonance frequency can be controlled by a magnetic field applied to the quantum bit. Fig. 6C illustrates a relationship between the magnetic field applied to the quantum bit and the resonance frequency of the quantum bit. By using such a relationship, in a case where it is desired to perform selective gate operation of the quantum bits, that is, in a case where it is desired to cause a difference in resonance frequency between the quantum bits, the operation can be realized by applying a magnetic field to the quantum bit to be controlled.

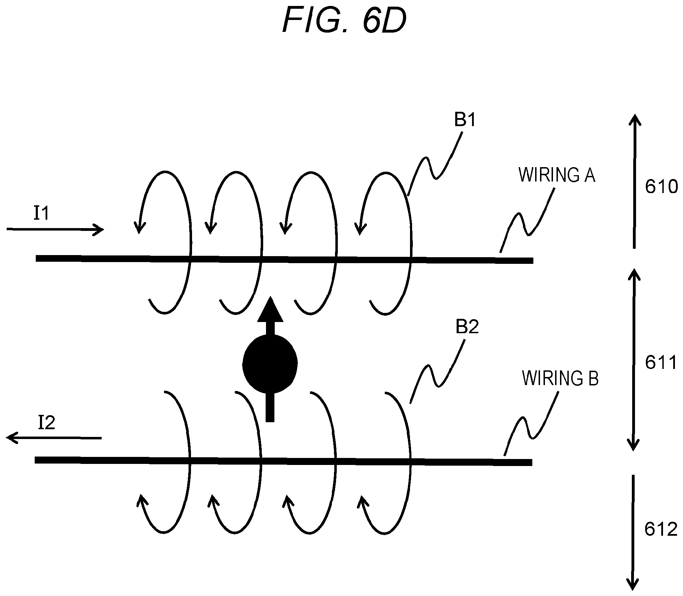

Fig. 6D is a principle diagram for explaining a principle of applying a desired magnetic field to a quantum bit by controlling a current. When there are two wirings A and B on both sides of the quantum bit, reverse currents I1 and I2 are caused to flow through the respective wirings. In this way, magnetic fields B1 and B2 generated by the currents are strengthened in a region 611 sandwiched between the two wirings, and the magnetic field is weakened in other regions 610 and 612. This enables application of a selective magnetic field to the quantum bits in the drawing.

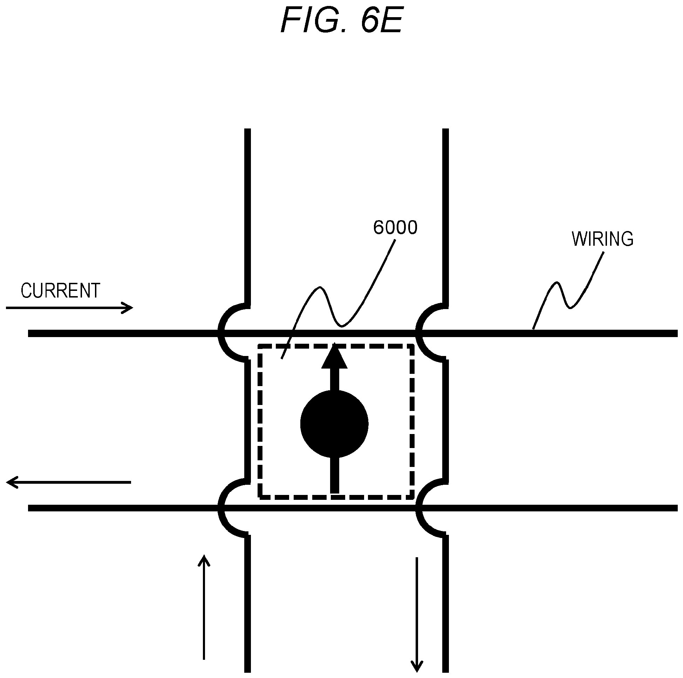

Fig. 6E illustrates a method of applying a selective magnetic field to a quantum bit in a two-dimensional plane by extending Fig. 6D. In this case, it is possible to selectively apply a magnetic field to the quantum bits in a region 6000 indicated by a dotted line in the drawing by causing a current to flow through the wirings stretched vertically and horizontally.

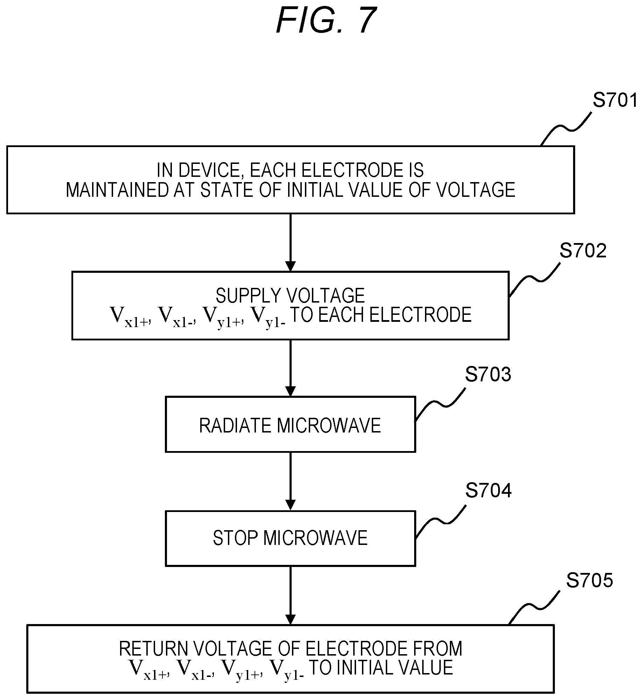

Fig. 7 is a flowchart describing a flow of the one-quantum bit computation. The initial state is a state in which an appropriate constant voltage is applied to each gate voltage (S701).

Next, a voltage is applied to both ends of each gate electrode so that a current flows through the gate electrode (S702).

Next, a microwave is radiated (S703). After a lapse of a certain period of time, the microwave radiation is stopped (S704). Thereafter, the gate voltage is returned to the original value so that no current flows through the gate electrode (S705). Note that, in a series of flows, the voltage applied to cause the current to flow through the gate electrode allows fluctuation.

An algebraic description of the one-quantum bit computation realized by the above configuration and method will be described. A quantum logic gate can be described using linear algebra. That is, it can be expressed by a matrix. As a premise, it is assumed that two states 0 and 1 of the bit are described by vectors of Equations 1 and 2, respectively.

[Mathematical Formula 1]

$$0 \rightarrow \begin{pmatrix} 1 \\ 0 \end{pmatrix}$$

$$\dots (Equation\ 1)$$

[Mathematical Formula 2]

$$1 \rightarrow \begin{pmatrix} 0 \\ 1 \end{pmatrix}$$

$$\dots (Equation\ 2)$$

Equation 3 is a mathematical description of the quantum logic gate (inversion gate) corresponding to Fig. 5. Other types of one-quantum bit computations can also be described in the form of a matrix.

[Mathematical Formula 3]

$$R = \begin{pmatrix} 0 & 1 \\ 1 & 0 \end{pmatrix}$$

$$...(Equation\ 3)$$

Although the quantum logic gate of Equation 3 is shown as a matrix, it can be decomposed into a plurality of matrices of computation. For example, the quantum logic gate of Equation 3 can be decomposed into the quantum logic gates of Equations 4 to 7. Equations 4 to 7 are each a computation that results in the one-quantum bit gate of Equation 3 when executed twice in succession as shown in Equation 8. Each computation can be generated by adjusting the irradiation time and phase of the microwave.

[Mathematical Formula 4]

$$R_x = \begin{pmatrix} \dfrac{1}{\sqrt{2}} & \dfrac{i}{\sqrt{2}} \\ \dfrac{i}{\sqrt{2}} & \dfrac{1}{\sqrt{2}} \end{pmatrix}$$

$$...(Equation\ 4)$$

[Mathematical Formula 5]

$$\overline{R_x} = \begin{pmatrix} -\dfrac{1}{\sqrt{2}} & \dfrac{i}{\sqrt{2}} \\ \dfrac{i}{\sqrt{2}} & -\dfrac{1}{\sqrt{2}} \end{pmatrix}$$

$$...(Equation\ 5)$$

[Mathematical Formula 6]

$$R_y = \begin{pmatrix} \dfrac{1}{\sqrt{2}} & \dfrac{1}{\sqrt{2}} \\ -\dfrac{1}{\sqrt{2}} & \dfrac{1}{\sqrt{2}} \end{pmatrix}$$

$$...(Equation\ 6)$$

[Mathematical Formula 7]

$$\overline{R_y} = \begin{pmatrix} -\dfrac{1}{\sqrt{2}} & \dfrac{1}{\sqrt{2}} \\ -\dfrac{1}{\sqrt{2}} & -\dfrac{1}{\sqrt{2}} \end{pmatrix}$$

$$...(Equation\ 7)$$

[Mathematical Formula 8]

$$R_x R_x = \begin{pmatrix} 0 & 1 \\ 1 & 0 \end{pmatrix} = R$$

$$\overline{R_x}\ \overline{R_x} = \begin{pmatrix} 0 & 1 \\ 1 & 0 \end{pmatrix} = R$$

$$R_y R_y = \begin{pmatrix} 0 & 1 \\ 1 & 0 \end{pmatrix} = R$$

$$\overline{R_y}\ \overline{R_y} = \begin{pmatrix} 0 & 1 \\ 1 & 0 \end{pmatrix} = R$$

$$...(Equation\ 8)$$

Next, the two-quantum bit computation will be described. Various types of two-quantum bit computations are known. Here, a method of a control phase rotating gate (CZ gate) is presented as an example. For this purpose, a non-selective exchange logic gate (SWAP gate) for the CZ gate is first described.

Fig. 8 illustrates the states of electrons and the states of quantum bits before and after a computation in the SWAP gate which is a typical two-quantum bit computation. The SWAP gate is a quantum logic gate in which two quantum bits act, and exchanges the states of the two quantum bits. The SWAP gate merely exchanges the state and does not exchange two electrons.

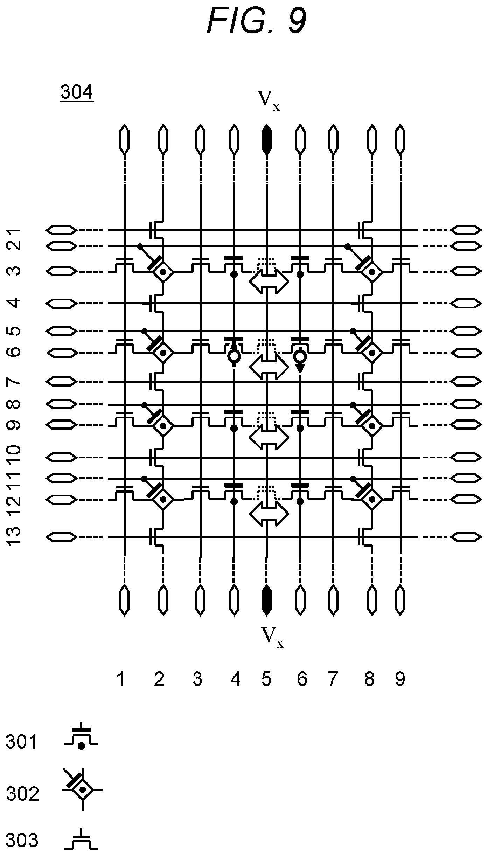

Fig. 9 is a diagram for explaining the operation of the quantum processor at the time of SWAP gate. The quantum bits on which the SWAP gate is caused to act are a pair which is indicated by white circles and is both the quantum bit (an intersection of the sixth row and the fourth column) located one right and one lower from the upper left corner and the quantum bit (an intersection of the sixth row and the sixth column) located two right and two lower from the upper left corner.

In order to cause the SWAP gate to act on this quantum bit, the voltage of the gate electrode of the barrier transistor separating these two quantum bits is changed to Vx only for a certain time. A feature of this computation method is that quantum bit pairs (all of the two-terminal transistors 301 on the lines of the fourth column and the sixth column) other than the above are also affected.

For example, the same computation is executed for a quantum bit (an intersection of the third row and the fourth column) located one right from the upper left corner of the quantum processor and a quantum bit (an intersection of the third rows and the sixth columns) located two right from the upper left corner. This is because the gate electrodes (the lines of the fifth column) of the transistors separating the quantum bit pairs are common. That is, the SWAP gate is not selective for a desired quantum bit pair, but is a non-selective quantum logic gate for a plurality of quantum bit pairs. This is a feature of the quantum processor having the common gate.

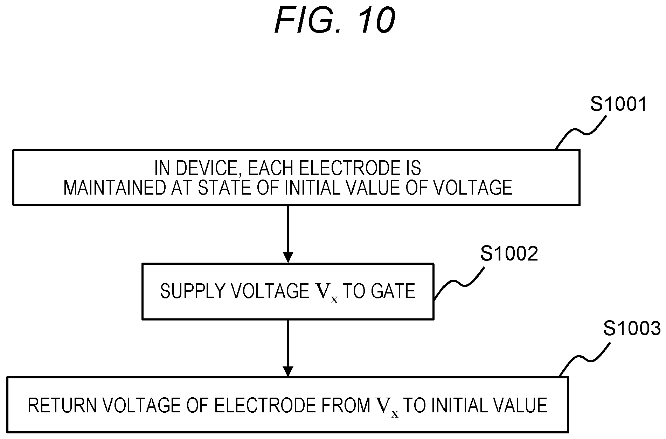

Fig. 10 is a flowchart describing a flow of a non-selective SWAP quantum bit computation. The initial state is a state in which an appropriate constant voltage is applied to each gate voltage (S1001). Next, a voltage is applied to the gate electrode (S1002). After a lapse of a certain period of time, the gate voltage is returned to the original value (S1003).

An algebraic description of the two-quantum bit computation realized by the above configuration and method will be described. As a premise, it is assumed that the states 00, 01, 10, and 11 of 2-bit are described by vectors of Equations 9 to 12, respectively.

[Mathematical Formula 9]

$$00 \quad \Rightarrow \quad \begin{pmatrix} 1 \\ 0 \\ 0 \\ 0 \end{pmatrix}$$

$$...(\text{Equation } 9)$$

[Mathematical Formula 10]

$$01 \quad \Rightarrow \quad \begin{pmatrix} 0 \\ 1 \\ 0 \\ 0 \end{pmatrix}$$

$$...(\text{Equation } 10)$$

[Mathematical Formula 11]

$$10 \quad \Rightarrow \quad \begin{pmatrix} 0 \\ 0 \\ 1 \\ 0 \end{pmatrix}$$

$$...(\text{Equation } 11)$$

[Mathematical Formula 12]

$$11 \quad \Rightarrow \quad \begin{pmatrix} 0 \\ 0 \\ 0 \\ 1 \end{pmatrix}$$

$$...(\text{Equation } 12)$$

Equation 13 is a mathematical description of the SWAP gate corresponding to Fig. 8.

[Mathematical Formula 13]

$$S = \begin{pmatrix} 1 & 0 & 0 & 0 \\ 0 & 0 & 1 & 0 \\ 0 & 1 & 0 & 0 \\ 0 & 0 & 0 & 1 \end{pmatrix}$$

$$...(\text{Equation } 13)$$

An example of the two-quantum bit computation is also described in, for example, JP 2021-27142 A. For later description, an example in which the quantum logic gate of Equation 13 is decomposed into a plurality of quantum logic gates will be described. Here, a quantum logic gate corresponding to half of the quantum logic gate of Equation 13 will be described. The quantum logic gate of Equation 14 can be realized by adjusting the time to apply to the gate electrode, and the quantum logic gate is equivalent to Equation 13 when operated twice as in Equation 15.

[Mathematical Formula 14]

$$\sqrt{S} = \begin{pmatrix} 1 & 0 & 0 & 0 \\ 0 & \dfrac{1}{2}+\dfrac{i}{2} & \dfrac{1}{2}-\dfrac{i}{2} & 0 \\ 0 & \dfrac{1}{2}-\dfrac{i}{2} & \dfrac{1}{2}+\dfrac{i}{2} & 0 \\ 0 & 0 & 0 & 1 \end{pmatrix}$$

$$...(\text{Equation } 14)$$

[Mathematical Formula 15]

$$\sqrt{S}\sqrt{S} = \begin{pmatrix} 1 & 0 & 0 & 0 \\ 0 & 0 & 1 & 0 \\ 0 & 1 & 0 & 0 \\ 0 & 0 & 0 & 1 \end{pmatrix} \quad \Rightarrow \quad S$$

...(Equation 15)

A SWAP quantum bit computation that simultaneously acts on a plurality of quantum bit pairs for commonality of the gate electrode has a problem when the SWAP quantum bit computation is used for the quantum computation. Hereinafter, an example will be described in which a plurality of quantum logic gates is combined to effectively perform selective two-quantum bit computations on two quantum bit pairs.

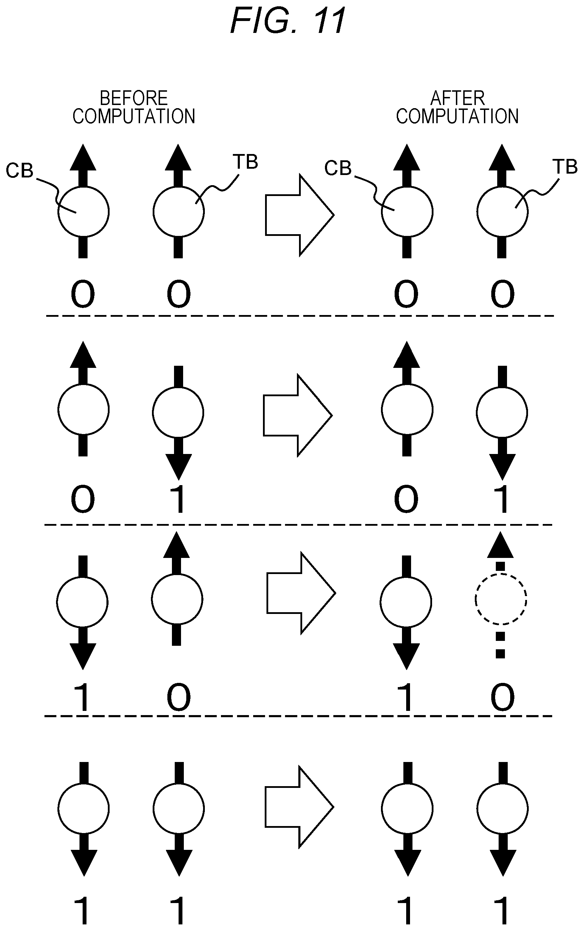

Fig. 11 illustrates quantum bit states before and after the action of the selective quantum logic gate to be effectively realized. This quantum logic gate is a quantum logic gate that changes the quantum phase of a right quantum bit TB (hereinafter, referred to as a first quantum bit (target bit)) depending on the state of a left quantum bit CB (hereinafter, referred to as a second quantum bit (control bit)). In the case of the CZ gate, only when the second quantum bit is 1, a phase rotation gate (Z gate) is caused to act on the first quantum bit. An algebraic description is as shown in Equation 16.
[Mathematical Formula 16]

$$CZ = \begin{pmatrix} 1 & 0 & 0 & 0 \\ 0 & 1 & 0 & 0 \\ 0 & 0 & -1 & 0 \\ 0 & 0 & 0 & 1 \end{pmatrix}$$

...(Equation 16)

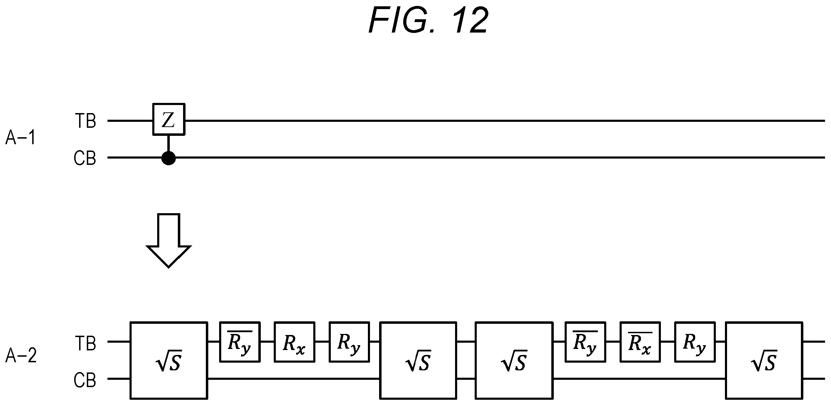

Fig. 12 illustrates a method for realizing the quantum logic gate of Fig. 11. A-1 as a gate procedure diagram illustrates a CZ gate. A-2 is a procedure for actually realizing the CZ gate. The quantum logic gate of A-1 can be effectively realized by combining and using the quantum logic gates of the one-quantum bit and the two-quantum bit described above.

In the example of Fig. 12, the quantum logic gate of the CZ gate is realized by combining the quantum logic gates of Equations 4 to 7 and Equation 14. Although the inversion gate or the SWAP gate are first decomposed into a plurality of quantum logic gates, it is considered that the degree of freedom of creating an arbitrary computation by combination is improved by subdividing the computation.

In the present embodiment, for a quantum bit that is not subjected to a quantum computation among the quantum bits sharing the gate, the operation of a half of the SWAP gate of Equation 14 is performed four times as a two-quantum bit gate. Since this is equivalent to two times of actions of the SWAP gate, the quantum bit returns to the original state, that is, the operation acts as an identity operator (I gate), and the result does not change. Even in a case where an operation equivalent to even number of times of actions of the SWAP gate is performed, the quantum bit returns to the original state. Even when an operation is not equivalent to two times of actions of the SWAP gate, the operation is acceptable as long as, as a result, the operation is equivalent to even number of times of actions of the SWAP gate, for example, the operation of a half of the SWAP gate is performed eight times.

Also for a quantum bit that is subjected to the quantum computation among the quantum bits sharing the gate, due to the structure of the device, the operation of a half of the SWAP gate of Equation 14 is necessarily performed four times as the two-quantum bit gate like other quantum bits. However, for the quantum bit on which the quantum computation is performed, the one-quantum bit computation is performed on the first quantum bit (target bit). The one-quantum bit computation can be selectively executed by the method described in Figs. 6A to 6E.

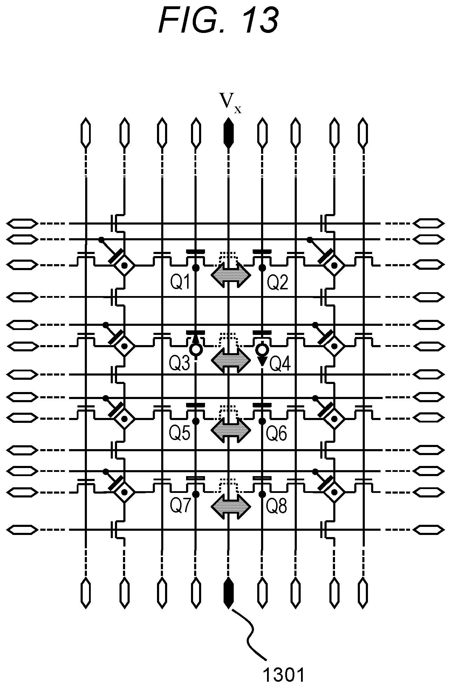

Fig. 13 illustrates a case where a CZ quantum gate is selectively performed on the quantum bit pair of Q3 and Q4.

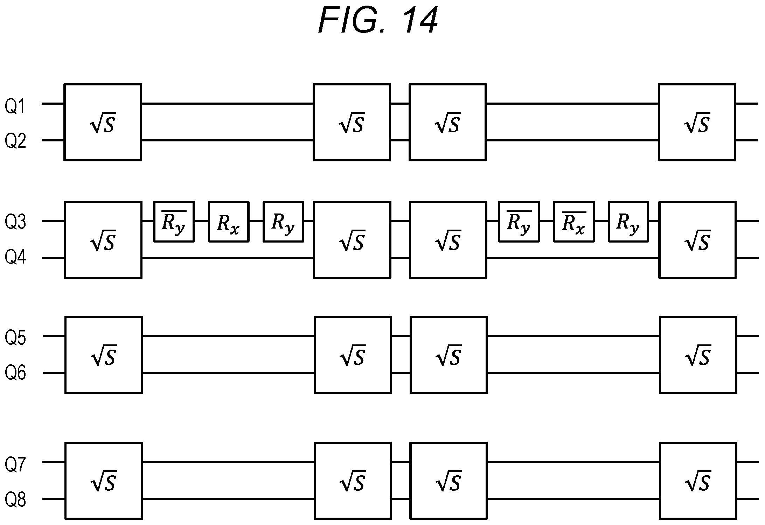

Fig. 14 illustrates a quantum computation performed on each quantum bit of Q1 to Q8 when the CZ quantum gate is selectively performed.

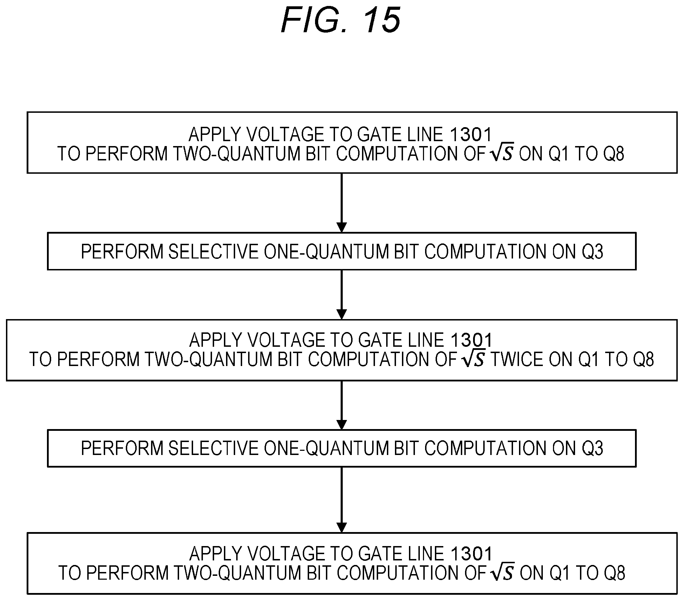

Fig. 15 is a flow of processing performed on the quantum circuit of Fig. 13 in order to perform the quantum computation of Fig. 14.

When a voltage of Vx is applied to a gate electrode 1301 of the barrier transistor 303 of Fig. 13 to cause a quantum gate of √S to act, the quantum gate acts on four quantum bit pairs of Q1 and Q2, Q3 and Q4, Q5 and Q6, and Q7 and Q8. Since this non-selectivity is caused by the common gate electrode, the non-selectivity is unavoidable in terms of structure.

However, when a series of quantum gates are caused to act as illustrated in Fig. 14, √S act four times on each of Q1 and Q2, Q5 and Q6, and Q7 and Q8. From Equations 15 and 13, the series of quantum gates are equivalent to that the quantum gate is not caused to act, and thus this series of quantum gates is equivalent to that the quantum gates are caused to act only on Q3 and Q4 as illustrated in Fig. 14. In this way, it is possible to cause the two-quantum bit operation to act only on a desired quantum bit pair.

As described above, the one-quantum bit computation and the selective two-quantum bit computation can be performed, whereby arbitrary quantum bit computation can be performed even in the quantum processor of the common wiring method.

This operation of the equivalent conversion may be instructed by the computer 403 in Fig. 4 or may be instructed by the drive unit 401. Note that the carrier of the semiconductor includes electrons and holes. Holes may be used instead of electrons.

According to the above-described embodiment, a quantum computer with high energy efficiency can be realized, and thus, it is possible to reduce energy consumption, reduce carbon emissions, prevent global warming, and contribute to the realization of a sustainable society.

**Claims**

1. A control method for performing a two-quantum bit computation on a plurality of pairs of quantum bits by a plurality of transistors (301, 302, 303) controlled collectively,

   wherein the plurality of transistors comprises a plurality of two-terminal transistors (301), a plurality of four-terminal transistors (302), and a plurality of barrier transistors (303), wherein the quantum bits constituting the plurality of pairs of quantum bits are formed as semiconductor quantum bits arranged in an array and wherein the collective control is accomplished by a plurality of gate electrodes each including a respective gate electrode line,
   wherein each gate electrode line is connected to one of:

   a plurality of the plurality of two-terminal transistors (301), a plurality of the plurality of four-terminal transistors (302), or a plurality of the plurality of barrier transistors (303) for controlling the transistors (301, 301, 303), wherein gate electrode lines of the plurality of gate electrodes comprise a first set of gate electrode lines which horizontally extend along the array and another set of gate electrode lines which vertically extend along the array, and
   wherein each of the quantum bits is surrounded by four gate electrode lines (Vxl+, Vxl-, Vyl+, Vyl-) including a left vertically extending gate electrode line (Vx1-), a right vertically extending gate electrode line (Vxl+), an upper horizontally extending gate electrode line (Vyl+), and a lower horizontally extending gate electrode line (Vyl-),
   the method comprising:

   selectively performing a one-quantum bit computation on a quantum bit selected from the plurality of pairs of quantum bits to selectively perform a two-quantum bit computation on a desired quantum bit pair selected from the plurality of pairs of quantum bits,

   **characterized in that** the step of selectively performing a one-quantum bit computation on a quantum bit includes applying a voltage to each of the four gate electrode lines (Vx1+, Vx1-, Vy1+, Vy-) surrounding the quantum bit, thereby causing a current to flow through each of the four gate electrode lines (Vx1+, Vx1-, Vy1+, Vy1-), to selectively apply a magnetic field to the quantum bit.

2. The control method of a quantum bit according to claim 1, the method further comprising: performing an even number of times of SWAP gate operations on the plurality of pairs of quantum bits to perform a one-quantum bit computation on at least one quantum bit of the desired quantum bit pair.

3. The control method of a quantum bit according to claim 2, the method further comprising: decomposing one SWAP gate operation of the plurality of SWAP gate operations into a plurality of two-quantum bit computations and executing the plurality of two-quantum bit computations to effectively perform two times of SWAP gate operations.

4. The control method of a quantum bit according to claim 3, the method further comprising: decomposing one time of the SWAP gate operation into a plurality of two-quantum bit computations and executing the plurality of two-quantum bit computations to perform two times of SWAP gate operations.

5. The control method of a quantum bit according to claim 2, wherein the one-quantum bit computation is obtained by decomposing a predetermined one-quantum bit computation.

6. The control method of a quantum bit according to claim 5, wherein the predetermined one-quantum bit computation is an inversion computation.

7. The control method of a quantum bit according to claim 6, further comprising: selectively performing a two-quantum bit computation on a desired quantum bit pair selected from the plurality of pairs of quantum bits by a control phase rotating gate operation.

8. A quantum computer that includes a quantum processor (304), a microwave antenna (402) for controlling the quantum processor (304), a drive unit (401) that drives the quantum processor (304) and the microwave antenna (402), and an ordinary computer (403) that controls the drive unit (401), and wherein the quantum computer is configured to perform a quantum gate operation on a quantum bit, wherein

the quantum processor (304) includes a plurality of quantum bits, wherein the quantum bits are formed as semiconductor quantum bits arranged in an array, a plurality of transistors (301, 302, 303) for performing the quantum gate operation, a plurality of gate electrodes each including a respective gate electrode line for controlling the transistors, the plurality of transistors (301, 302, 303) includes a plurality of two-terminal transistors (301), a plurality of four-terminal transistors (302), and a plurality of barrier transistors (303),

the gate electrode line of each gate electrode is common to each transistor in one of: a plurality of the two-terminal transistors (301), a plurality of the four-terminal transistors (302), or a plurality of the barrier transistors (303), the gate electrode lines of the plurality of gate electrodes comprise a first set of gate electrode lines which horizontally extend along the array, and another set of gate electrode lines which vertically extend along the array, each of the quantum bits is surrounded by four gate electrode lines (Vxl+, Vxl-, Vyl+, Vyl-) including a left vertically extending gate electrode line (Vxl-), a right vertically extending gate electrode line (Vxl+), an upper horizontally extending gate electrode line (Vyl+) and a lower horizontally extending gate electrode line (Vyl-),

the ordinary computer is configured to control the quantum gate operation by an electric signal applied to at least one of the gate electrodes and by microwave radiation emitted by the microwave antenna (402),

at least one of the ordinary computer (403) and the drive unit (401) has a function of decomposing a desired quantum gate operation into element quantum gate operations,

each performed on the quantum bit as a one-quantum bit computation to realize the desired quantum gate operation, **characterized in that** the drive unit (401) is configured to apply, at the time of the one-quantum bit computation, a voltage to the four gate electrode lines (Vxl+, Vx1-, Vyl+, Vy1-) surrounding the quantum bit, thereby causing a current to flow through each of the four gate electrode lines to selectively apply a magnetic field to the quantum bit.

9. The quantum computer according to claim 8, wherein

when the quantum computer performs the quantum gate operation on a plurality of pairs of quantum bits by the transistor having the common gate electrode,

the quantum computer is configured to realize a first quantum gate operation by performing a first element quantum gate operation on a first quantum bit pair selected from the plurality of pairs of quantum bits; and

to realize a second quantum gate operation by performing a second element quantum gate operation on a second quantum bit pair selected from the plurality of pairs of quantum bits.

10. The quantum computer according to claim 9, wherein

the first element quantum gate operation is a quantum gate operation in the decomposition of a SWAP gate operation on the first quantum bit pair or a quantum gate operation in the decomposition of a one-quantum bit gate operation on any quantum bit of the first quantum bit pair, and the second element quantum gate operation is a decomposition of a SWAP gate operation on the second quantum bit pair, and the second quantum gate operation does not change a state of the second quantum bit pair.

11. The quantum computer according to claim 10, wherein

in the quantum gate operation obtained by decomposing the SWAP gate operation, the quantum gate operation is performed by the transistor having a common gate electrode, and

in the quantum gate operation obtained by decomposing the one-quantum bit gate operation, the quantum gate operation is performed by application of an electromagnetic field to any quantum bit of the first quantum bit pair and microwave radiation emitted by the microwave antenna (402).

12. The quantum computer according to claim 11, wherein

the one-quantum bit gate operation is an inversion gate operation.

13. The quantum computer according to claim 12, wherein

the first quantum gate operation is a control phase rotating gate operation on the first quantum bit pair.

**Patentansprüche**

1. Steuerverfahren zum Durchführen einer Zwei-Quantenbit-Berechnung an einer Vielzahl von Paaren von Quantenbits durch eine Vielzahl von Transistoren (301, 302, 303), die kollektiv gesteuert werden,

wobei die Vielzahl von Transistoren eine Vielzahl von Zwei-Anschluss-Transistoren (301), eine Vielzahl von Vier-Anschluss-Transistoren (302) und eine Vielzahl von Barriere-Transistoren (303) umfasst,

wobei die Quantenbits, die die Vielzahl von Paaren von Quantenbits bilden, als Halbleiter-Quantenbits ausgebildet sind, die in einer Anordnung angeordnet sind, und wobei die kollektive Steuerung durch eine Vielzahl von Gate-Elektroden erfolgt, die jeweils eine entsprechende Gate-Elektrodenleitung umfassen,

wobei jede Gate-Elektrodenleitung mit einem der folgenden verbunden ist:

einer Vielzahl der Vielzahl von Zwei-Anschluss-Transistoren (301), einer Vielzahl der Vielzahl von Vier-Anschluss-Transistoren (302) oder einer Vielzahl der Vielzahl von Barriere-Transistoren (303) zur Steuerung der Transistoren (301, 301, 303), wobei Gate-Elektrodenleitungen der Vielzahl von Gate-Elektroden einen ersten Satz von Gate-Elektrodenleitungen umfassen, die horizontal entlang der Anordnung verlaufen, und einen weiteren Satz von Gate-Elektrodenleitungen, die vertikal entlang der Anordnung verlaufen, und wobei jedes der Quantenbits von vier Gate-Elektrodenleitungen (Vx1+, Vx1-, Vy1+, Vy1-) umgeben ist, die eine linke vertikal verlaufende Gate-Elektrodenleitung (Vx1-), eine rechte vertikal verlaufende Gate-Elektrodenleitung (Vx1+), eine obere horizontal verlaufende Gate-Elektrodenleitung (Vy1+) und eine untere horizontal verlaufende Gate-Elektrodenleitung (Vy1-) umfassen, wobei das Verfahren umfasst:

selektives Durchführen einer Ein-Quantenbit-Berechnung an einem Quantenbit, das aus der Vielzahl von Paaren von Quantenbits ausgewählt ist, um selektiv eine Zwei-Quantenbit-Berechnung an einem gewünschten Quantenbit-Paar durchzuführen, das aus der Vielzahl von Paaren von Quantenbits ausgewählt ist, **dadurch gekennzeichnet, dass** der Schritt des selektiven Durchführens einer Ein-Quantenbit-Berechnung an einem Quantenbit das Anlegen einer Spannung an jede der vier Gate-Elektrodenleitungen (Vx1+, Vx1-, Vy1+, Vy1-), die das Quantenbit umgeben, umfasst, wodurch ein Strom durch jede der vier Gate-Elektrodenleitungen fließt, um selektiv ein Magnetfeld an das Quantenbit anzulegen.

2. Steuerverfahren eines Quantenbits nach Anspruch 1, wobei das Verfahren ferner umfasst:
Durchführen einer geraden Anzahl von SWAP-Gate-Operationen an der Vielzahl von Paaren von Quantenbits, um eine Ein-Quantenbit-Berechnung an mindestens einem Quantenbit des gewünschten Quantenbit-Paars durchzuführen.

3. Steuerverfahren eines Quantenbits nach Anspruch 2, wobei das Verfahren ferner umfasst:
Zerlegen einer SWAP-Gate-Operation der Vielzahl von SWAP-Gate-Operationen in eine Vielzahl von Zwei-Quantenbit-Berechnungen und Ausführen der Vielzahl von Zwei-Quantenbit-Berechnungen, um effektiv zwei SWAP-Gate-Operationen durchzuführen.

4. Steuerverfahren eines Quantenbits nach Anspruch 3, wobei das Verfahren ferner umfasst:
Zerlegen einer SWAP-Gate-Operation in eine Vielzahl von Zwei-Quantenbit-Berechnungen und Ausführen der Vielzahl von Zwei-Quantenbit-Berechnungen, um zwei SWAP-Gate-Operationen durchzuführen.

5. Steuerverfahren eines Quantenbits nach Anspruch 2, wobei die Ein-Quantenbit-Berechnung durch Zerlegen einer vorgegebenen Ein-Quantenbit-Berechnung erhalten wird.

6. Steuerverfahren eines Quantenbits nach Anspruch 5, wobei die vorgegebene Ein-Quantenbit-Berechnung eine Inversionsberechnung ist.

7. Steuerverfahren eines Quantenbits nach Anspruch 6, ferner umfassend:
selektives Durchführen einer Zwei-Quantenbit-Berechnung an einem gewünschten Quantenbit-Paar, das aus der Vielzahl von Paaren von Quantenbits ausgewählt ist, durch eine Kontrollphasen-Rotationsgate-Operation.

8. Quantencomputer, der einen Quantenprozessor (304), eine Mikrowellenantenne (402) zur Steuerung des Quantenprozessors (304), eine Treibereinheit (401), die den Quantenprozessor (304) und die Mikrowellenantenne (402) treibt, und einen gewöhnlichen Computer (403), der die Treibereinheit (401) steuert, umfasst, und wobei der Quantencomputer dazu ausgelegt ist, eine Quantengate-Operation an einem Quantenbit durchzuführen, wobei

der Quantenprozessor (304) eine Vielzahl von Quantenbits umfasst, wobei die Quantenbits als Halbleiter-Quantenbits ausgebildet sind, die in einer Anordnung angeordnet sind, eine Vielzahl von Transistoren (301, 302, 303) zum Durchführen der Quantengate-Operation, eine Vielzahl von Gate-Elektroden, die jeweils eine entsprechende Gate-Elektrodenleitung umfassen, zur Steuerung der Transistoren,

die Vielzahl von Transistoren (301, 302, 303) eine Vielzahl von Zwei-Anschluss-Transistoren (301), eine Vielzahl von Vier-Anschluss-Transistoren (302) und eine Vielzahl von Barriere-Transistoren (303) umfasst,

die Gate-Elektrodenleitung jeder Gate-Elektrode gemeinsam für jeden Transistor in einem der folgenden ist: einer Vielzahl der Zwei-Anschluss-Transistoren (301), einer Vielzahl der Vier-Anschluss-Transistoren (302) oder einer Vielzahl der Barriere-Transistoren (303),

die Gate-Elektrodenleitungen der Vielzahl von Gate-Elektroden einen ersten Satz von Gate-Elektrodenleitungen umfassen, die horizontal entlang der Anordnung verlaufen, und einen weiteren Satz von Gate-Elektrodenleitungen, die vertikal entlang der Anordnung verlaufen,

jedes der Quantenbits von vier Gate-Elektrodenleitungen (Vx1+, Vx1-, Vy1+, Vy1-) umgeben ist, die eine linke vertikal verlaufende Gate-Elektrodenleitung (Vx1-), eine rechte vertikal verlaufende Gate-Elektrodenleitung (Vx1+), eine obere horizontal verlaufende Gate-Elektrodenleitung (Vy1+) und eine untere horizontal verlaufende Gate-Elektrodenleitung (Vy1-) umfassen,

der gewöhnliche Computer dazu ausgelegt ist, die Quantengate-Operation durch ein elektrisches Signal zu steuern, das an mindestens eine der Gate-Elektroden angelegt wird, und durch Mikrowellenstrahlung, die von der Mikrowellenantenne (402) ausgestrahlt wird,

mindestens einer des gewöhnlichen Computers (403) und der Treibereinheit (401) eine Funktion hat, eine gewünschte Quantengate-Operation in elementare Quantengate-Operationen zu zerlegen,

die jeweils an dem Quantenbit als eine Ein-Quantenbit-Berechnung durchgeführt werden, um die gewünschte Quantengate-Operation zu realisieren,

**dadurch gekennzeichnet, dass** die Treibereinheit (401) dazu ausgelegt ist, zum Zeitpunkt der Ein-Quantenbit-Berechnung eine Spannung an die vier Gate-Elektrodenleitungen (Vx1+, Vx1-, Vy1+, Vy1-), die das Quantenbit umgeben, anzulegen, wodurch ein Strom durch jede der vier Gate-Elektrodenleitungen fließt, um selektiv ein Magnetfeld an das Quantenbit anzulegen.

9. Quantencomputer nach Anspruch 8, wobei

wenn der Quantencomputer die Quantengate-Operation an einer Vielzahl von Paaren von Quantenbits durch den Transistor mit der gemeinsamen Gate-Elektrode durchführt, der Quantencomputer dazu ausgelegt ist, eine erste Quantengate-Operation zu realisieren, indem er eine erste elementare Quantengate-Operation an einem ersten Quantenbit-Paar durchführt, das aus der Vielzahl von Paaren von Quantenbits ausgewählt ist; und eine zweite Quantengate-Operation zu realisieren, indem er eine zweite elementare Quantengate-Operation an einem zweiten Quantenbit-Paar durchführt, das aus der Vielzahl von Paaren von Quantenbits ausgewählt ist.

10. Quantencomputer nach Anspruch 9, wobei

die erste elementare Quantengate-Operation eine Quantengate-Operation in der Zerlegung einer SWAP-Gate-Operation an dem ersten Quantenbit-Paar oder eine Quantengate-Operation in der Zerlegung einer Ein-Quantenbit-Gate-Operation an einem beliebigen Quantenbit des ersten Quantenbit-Paars ist, und die zweite elementare Quantengate-Operation eine Zerlegung einer SWAP-Gate-Operation an dem zweiten Quantenbit-Paar ist, und die zweite Quantengate-Operation einen Zustand des zweiten Quantenbit-Paars nicht ändert.

11. Quantencomputer nach Anspruch 10, wobei

in der Quantengate-Operation, die durch Zerlegen der SWAP-Gate-Operation erhalten wird, die Quantengate-Operation durch den Transistor mit einer gemeinsamen Gate-Elektrode durchgeführt wird, und in der Quantengate-Operation, die durch Zerlegen der Ein-Quantenbit-Gate-Operation erhalten wird, die Quantengate-Operation durch Anlegen eines elektromagnetischen Feldes an ein beliebiges Quantenbit des ersten Quantenbit-Paars und Mikrowellenstrahlung, die von der Mikrowellenantenne (402) ausgestrahlt wird, durchgeführt wird.

12. Quantencomputer nach Anspruch 11, wobei die Ein-Quantenbit-Gate-Operation eine Inversionsgate-Operation ist.

13. Quantencomputer nach Anspruch 12, wobei die erste Quantengate-Operation eine Kontrollphasen-Rotationsgate-Operation an dem ersten Quantenbit-Paar ist.

**Revendications**

1. Procédé de commande pour effectuer un calcul à deux bits quantiques sur une pluralité de paires de bits quantiques par une pluralité de transistors (301, 302, 303) commandés collectivement,

   dans lequel la pluralité de transistors comprend une pluralité de transistors à deux bornes (301), une pluralité de transistors à quatre bornes (302), et une pluralité de transistors à barrière (303),

   dans lequel les bits quantiques constituant la pluralité de paires de bits quantiques sont formés comme des bits quantiques semi-conducteurs agencés en une matrice et dans lequel la commande collective est accomplie par une pluralité d'électrodes grille incluant chacune une ligne d'électrode grille respective,

   dans lequel chaque ligne d'électrode grille est connectée à une parmi :

   une pluralité parmi la pluralité de transistors à deux bornes (301), une pluralité parmi la pluralité de transistors à quatre bornes (302), ou une pluralité parmi la pluralité de transistors à barrière (303) pour commander les transistors (301, 302, 303), dans lequel des lignes d'électrode grille parmi la pluralité d'électrodes grille comprennent un premier ensemble de lignes d'électrode grille qui s'étendent horizontalement le long de la matrice et un autre ensemble de lignes d'électrode grille qui s'étendent verticalement le long de la matrice, et

   dans lequel chacun des bits quantiques est entouré par quatre lignes d'électrode grille (Vx1+, Vx1-, Vy1+, Vy1-) incluant une ligne d'électrode grille s'étendant verticalement gauche (Vx1-), une ligne d'électrode grille s'étendant verticalement droite (Vx1+), une ligne d'électrode grille s'étendant horizontalement supérieure (Vy1+), et une ligne d'électrode grille s'étendant horizontalement inférieure (Vy1-),

   le procédé comprenant :

   l'exécution sélective d'un calcul à un bit quantique sur un bit quantique choisi parmi la pluralité de paires de bits quantiques pour effectuer sélectivement un calcul à deux bits quantiques sur une paire de bits quantiques désirée choisie parmi la pluralité de paires de bits quantiques,
   **caractérisé en ce que** l'étape d'exécution sélective d'un calcul à un bit quantique sur un bit quantique inclut l'application d'une tension à chacune des quatre lignes d'électrode grille (Vx1+, Vx1-, Vy1+, Vy1-) entourant le bit quantique, amenant ainsi un courant à traverser chacune des quatre lignes d'électrode grille (Vx1+, Vx1-, Vy1+, Vy1-), pour appliquer sélectivement un champ magnétique au bit quantique.

2. Procédé de commande d'un bit quantique selon la revendication 1, le procédé comprenant en outre : l'exécution un nombre pair de fois d'opérations de porte SWAP sur la pluralité de paires de bits quantiques pour effectuer un calcul à un bit quantique sur au moins un bit quantique de la paire de bits quantiques désirée.

3. Procédé de commande d'un bit quantique selon la revendication 2, le procédé comprenant en outre : la décomposition d'une opération de porte SWAP parmi la pluralité d'opérations de porte SWAP en une pluralité de calculs à deux bits quantiques et l'exécution de la pluralité de calculs à deux bits quantiques pour efficacement effectuer deux fois des opérations de porte SWAP.

4. Procédé de commande d'un bit quantique selon la revendication 3, le procédé comprenant en outre : la décomposition une fois de l'opération de porte SWAP en une pluralité de calculs à deux bits quantiques et l'exécution de la pluralité de calculs à deux bits quantiques pour effectuer deux fois des opérations de porte SWAP.

5. Procédé de commande d'un bit quantique selon la revendication 2, dans lequel le calcul à un bit quantique est obtenu en décomposant un calcul à un bit quantique prédéterminé.

6. Procédé de commande d'un bit quantique selon la revendication 5, dans lequel le calcul à un bit quantique prédéterminé est un calcul d'inversion.

7. Procédé de commande d'un bit quantique selon la revendication 6, comprenant en outre : l'exécution sélective d'un calcul à deux bits quantiques sur une paire de bits quantiques désirée choisie parmi la pluralité de paires de bits quantiques par une opération de porte de rotation de phase de commande.

8. Ordinateur quantique qui inclut un processeur quantique (304), une antenne à micro-ondes (402) pour commander le processeur quantique (304), une unité (401) d'entraînement qui entraîne le processeur quantique (304) et l'antenne à micro-ondes (402), et un ordinateur ordinaire (403) qui commande l'unité (401) d'entraînement, et dans lequel l'ordinateur quantique est configuré pour effectuer une opération de porte quantique sur un bit quantique, dans lequel

le processeur quantique (304) inclut une pluralité de bits quantiques, dans lequel les bits quantiques sont formés comme des bits quantiques semi-conducteurs agencés en une matrice, une pluralité de transistors (301, 302, 303) pour effectuer l'opération de porte quantique, une pluralité d'électrodes grille incluant chacune une ligne d'électrode grille respective pour commander les transistors, la pluralité de transistors (301, 302, 303) inclut une pluralité de transistors à deux bornes (301), une pluralité de transistors à quatre bornes (302), et une pluralité de transistors à barrière (303),

la ligne d'électrode grille de chaque électrode grille est commune à chaque transistor dans une parmi : une pluralité des transistors à deux bornes (301), une pluralité des transistors à quatre bornes (302), ou une pluralité des transistors à barrière (303),

les lignes d'électrode grille de la pluralité d'électrodes grille comprennent un premier ensemble de lignes d'électrode grille qui s'étendent horizontalement le long de la matrice et un autre ensemble de lignes d'électrode grille qui s'étendent verticalement le long de la matrice,

chacun des bits quantiques est entouré par quatre lignes d'électrode grille (Vx1+, Vx1-, Vy1+, Vy1-) incluant une ligne d'électrode grille s'étendant verticalement gauche (Vx1-), une ligne d'électrode grille s'étendant verticalement droite (Vx1+), une ligne d'électrode grille s'étendant horizontalement supérieure (Vy1+), et une ligne d'électrode grille s'étendant horizontalement inférieure (Vy1-),

l'ordinateur ordinaire est configuré pour commander l'opération de porte quantique par un signal électrique appliqué à au moins une des électrodes grille et par un rayonnement micro-ondes émis par l'antenne à micro-ondes (402),

au moins un(e) parmi l'ordinateur ordinaire (403) et l'unité (401) d'entraînement a une fonction de décomposition d'une opération de porte quantique désirée en des opérations de porte quantique élémentaires,

chacune exécutée sur le bit quantique comme un calcul à un bit quantique pour réaliser l'opération de porte quantique désirée,

**caractérisé en ce que** l'unité (401) d'entraînement est configurée pour appliquer, au moment du calcul à un bit quantique une tension aux quatre lignes d'électrode grille (Vx1+, Vx1-, Vy1+, Vy1-) entourant le bit quantique, amenant ainsi un courant à traverser chacune des quatre lignes d'électrode grille pour appliquer sélectivement un champ magnétique au bit quantique.

9. Ordinateur quantique selon la revendication 8, dans lequel

lorsque l'ordinateur quantique effectue l'opération de porte quantique sur une pluralité de paires de bits quantiques par le transistor ayant l'électrode grille commune,

l'ordinateur quantique est configuré pour réaliser une première opération de porte quantique en effectuant une première opération de porte quantique élémentaire sur une première paire de bits quantiques choisie parmi la pluralité de paires de bits quantiques ; et

pour réaliser une deuxième opération de porte quantique en effectuant une deuxième opération de porte quantique élémentaire sur une deuxième paire de bits quantiques choisie parmi la pluralité de paires de bits quantiques.

10. Ordinateur quantique selon la revendication 9, dans lequel

la première opération de porte quantique élémentaire est une opération de porte quantique dans la décomposition d'une opération de porte SWAP sur la première paire de bits quantiques ou une opération de porte quantique dans la décomposition d'une opération de porte à un bit quantique sur un quelconque bit quantique de la première paire de bits quantiques, et

la deuxième opération de porte quantique élémentaire est une décomposition d'une opération de porte SWAP sur la deuxième paire de bits quantiques, et la deuxième opération de porte quantique ne change pas un état de la deuxième paire de bits quantiques.

11. Ordinateur quantique selon la revendication 10, dans lequel

dans l'opération de porte quantique obtenue en décomposant l'opération de porte SWAP, l'opération de porte quantique est effectuée par le transistor ayant une électrode grille commune, et

dans l'opération de porte quantique obtenue en décomposant l'opération de porte à un bit quantique, l'opération de porte quantique est effectuée par application d'un champ électromagnétique à un quelconque bit quantique de la première paire de bits quantiques et d'un rayonnement micro-ondes émis par l'antenne à micro-ondes (402).

12. Ordinateur quantique selon la revendication 11, dans lequel
l'opération de porte à un bit quantique est une opération de porte d'inversion.

13. Ordinateur quantique selon la revendication 12, dans lequel
la première opération de porte quantique est une opération de porte de rotation de phase de commande sur la première paire de bits quantiques.

*FIG. 1*

101

⇔ 0

⇔ 1

# FIG. 2

# FIG. 3

FIG. 4

# FIG. 5

BEFORE
COMPUTATION

AFTER
COMPUTATION

0

1

1

0

## FIG. 6A

## FIG. 6B

MICROWAVE
(FREQUENCY $f_1$)

RESONANCE
FREQUENCY $f_1$

RESONANCE
FREQUENCY $f_2$

## FIG. 6C

RESONANCE FREQUENCY $f_1$

MAGNETIC FIELD APPLIED TO QUANTUM BIT

## FIG. 6D

## FIG. 6E

CURRENT

6000

WIRING

# FIG. 7

S701

IN DEVICE, EACH ELECTRODE IS
MAINTAINED AT STATE OF INITIAL VALUE OF VOLTAGE

S702

SUPPLY VOLTAGE
$V_{x1+}, V_{x1-}, V_{y1+}, V_{y1-}$ TO EACH ELECTRODE

S703

RADIATE MICROWAVE

S704

STOP MICROWAVE

S705

RETURN VOLTAGE OF ELECTRODE FROM
$V_{x1+}, V_{x1-}, V_{y1+}, V_{y1-}$ TO INITIAL VALUE

# FIG. 8

# FIG. 9

# FIG. 10

IN DEVICE, EACH ELECTRODE IS
MAINTAINED AT STATE OF INITIAL VALUE OF VOLTAGE — S1001

SUPPLY VOLTAGE $V_x$ TO GATE — S1002

RETURN VOLTAGE OF ELECTRODE FROM $V_x$ TO INITIAL VALUE — S1003

# FIG. 11

## FIG. 12

# FIG. 13

1301

EP 4 231 205 B1

# FIG. 14

# FIG. 15

APPLY VOLTAGE TO GATE LINE 1301
TO PERFORM TWO-QUANTUM BIT COMPUTATION OF $\sqrt{S}$ ON Q1 TO Q8

PERFORM SELECTIVE ONE-QUANTUM BIT COMPUTATION ON Q3

APPLY VOLTAGE TO GATE LINE 1301
TO PERFORM TWO-QUANTUM BIT COMPUTATION OF $\sqrt{S}$ TWICE ON Q1 TO Q8

PERFORM SELECTIVE ONE-QUANTUM BIT COMPUTATION ON Q3

APPLY VOLTAGE TO GATE LINE 1301
TO PERFORM TWO-QUANTUM BIT COMPUTATION OF $\sqrt{S}$ ON Q1 TO Q8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021027142 A

### Non-patent literature cited in the description

- **VELDENHORST M.** Silicon CMOS architecture for a spin-based quantum computer. *Nature Communications*, 01 December 2017, vol. 8 (1)

- A Silicon Surface Code Architecture Resilient Against Leakage Errors. **ZHENYU CAI**. ARXIV.ORG. CORNELL UNIVERSITY LIBRARY, 23 April 2019